# EUROPÄISCHE PATENTSCHRIFT

(11) **EP 2 636 715 B1**
(45) Veröffentlichungstag und Bekanntmachung des Hinweises auf die Patenterteilung: **29.06.2016**
(21) Anmeldenummer: 12158550.9
(22) Anmeldetag: 08.03.2012
(51) Int. Cl.: C09K 5/04, F25B 15/00

(54) **ARBEITSMEDIUM FÜR ABSORPTIONSWÄRMEPUMPEN**
WORKING FLUID FOR ABSORPTION HEAT PUMPS
SUPPORT DE TRAVAIL POUR POMPES À CHALEUR À ABSORPTION

(43) Veröffentlichungstag der Anmeldung: 11.09.2013
(73) Patentinhaber: Evonik Degussa GmbH, 45128 Essen (DE)
(72) Erfinder: Schneider, Marc-Christoph, 64285 Darmstadt (DE); Zehnacker, Olivier, 45657 Recklinghausen (DE); Schneider, Rolf, 63584 Gründau-Rothenbergen (DE); Seiler, Matthias, Dr., 64347 Griesheim (DE)

(56) Entgegenhaltungen:
- EP-A2- 2 246 651
- WO-A1-2005/113702
- DE-A1-102010 027 914
- HE Z ET AL: "Thermodynamic properties of new heat pump working pairs: 1,3-Dimethylimidazolium dimethylphosphate and water, ethanol and methanol", FLUID PHASE EQUILIBRIA, ELSEVIER, AMSTERDAM, NL, Bd. 298, Nr. 1, 15. November 2010 (2010-11-15), Seiten 83-91, XP027279058, ISSN: 0378-3812 [gefunden am 2010-07-15]
- JING REN ET AL: "Vapor pressures, excess enthalpies, and specific heat capacities of the binary working pairs containing the ionic liquid 1-ethyl-3-methylimidazolium dimethylphosphate", JOURNAL OF CHEMICAL THERMODYNAMICS, ACADEMIC PRESS, LONDON, GB, Bd. 43, Nr. 4, 18. November 2010 (2010-11-18), Seiten 576-583, XP028151648, ISSN: 0021-9614, DOI: 10.1016/J.JCT.2010.11.014 [gefunden am 2010-11-25]
- ZHAO J ET AL: "Vapor pressure measurement for binary and ternary systems containing a phosphoric ionic liquid", FLUID PHASE EQUILIBRIA, ELSEVIER, AMSTERDAM, NL, Bd. 247, Nr. 1-2, 15. September 2006 (2006-09-15), Seiten 190-198, XP024937020, ISSN: 0378-3812, DOI: 10.1016/J.FLUID.2006.07.007 [gefunden am 2006-09-15]

## Beschreibung

Die Erfindung betrifft ein Arbeitsmedium für Absorptionswärmepumpen, das Ethanol als Kältemittel und 1,3-Dimethylimidazoliumdiethylphosphat als Sorptionsmittel umfasst.

Klassische Wärmepumpen beruhen auf einem Kreislauf eines Kältemittels über einen Verdampfer und einen Kondensator. Im Verdampfer wird ein Kältemittel verdampft, wobei durch die vom Kältemittel aufgenommene Verdampfungswärme einem ersten Medium Wärme entzogen wird. Das verdampfte Kältemittel wird dann mit einem Kompressor auf einen höheren Druck gebracht und bei einer höheren Temperatur als bei der Verdampfung im Kondensator kondensiert, wobei die Verdampfungswärme wieder frei wird und auf einem höheren Temperaturniveau Wärme an ein zweites Medium abgegeben wird. Anschließend wird das verflüssigte Kältemittel wieder auf den Druck des Verdampfers entspannt.

Die klassischen Wärmepumpen haben den Nachteil, dass sie viel mechanische Energie für die Kompression des dampfförmigen Kältemittels verbrauchen. Absorptionswärmepumpen weisen demgegenüber einen verringerten Bedarf an mechanischer Energie auf. Absorptionswärmepumpen weisen zusätzlich zu dem Kältemittel, dem Verdampfer und dem Kondensator einer klassischen Wärmepumpe noch ein Sorptionsmittel, einen Absorber und einen Desorber auf. Im Absorber wird das verdampfte Kältemittel bei dem Druck der Verdampfung in dem Sorptionsmittel absorbiert und anschließend im Desorber bei dem höheren Druck der Kondensation durch Wärmezufuhr wieder aus dem Sorptionsmittel desorbiert. Die Verdichtung des flüssigen Arbeitsmediums aus Kältemittel und Sorptionsmittel erfordert weniger mechanische Energie als die Kompression des Kältemitteldampfs in einer klassischen Wärmepumpe, an Stelle des Verbrauchs an mechanischer Energie tritt die zur Desorption des Kältemittels eingesetzte Wärmeenergie. Die Leistungszahl einer Absorptionswärmepumpe wird berechnet als das Verhältnis des zum Kühlen bzw. Heizen genutzten Wärmestroms zu dem Wärmestrom, der dem Desorber für den Betrieb der Absorptionswärmepumpe zugeführt wird, und wird als "Coefficient of Performance", abgekürzt COP, bezeichnet.

Die derzeit technisch eingesetzten Absorptionswärmepumpen verwenden ein Arbeitsmedium, das Wasser als Kältemittel und Lithiumbromid als Sorptionsmittel enthält. Bei diesem Arbeitsmedium darf eine Wasserkonzentration von 35 bis 40 Gew.-% im Arbeitsmedium nicht unterschritten werden, da es sonst zur Kristallisation von Lithiumbromid und dadurch zu Störungen bis hin zu einer Verfestigung des Arbeitsmediums kommen kann. Bei Absorptionskältemaschinen, die ein Arbeitsmedium mit Wasser als Kältemittel und Lithiumbromid als Sorptionsmittel verwenden, muss deshalb die Wärme im Absorber auf einem Temperaturniveau abgeführt werden, das in heißen Ländern eine Kühlung über einen Nasskühlturm erforderlich macht.

In WO.2005/113702 und WO 2006/134015 wurde vorgeschlagen,. zur Vermeidung von Störungen durch Kristallisation des Sorptionsmittels Arbeitsmedien einzusetzen, die eine ionische Flüssigkeit mit organischen Kationen als Sorptionsmittel enthält.

Mit Arbeitsmedien, die als Sorptionsmittel eine ionische Flüssigkeit enthalten, wird jedoch in der Regel nur eine unbefriedigende Leistungszahl erreicht.

Arbeitsmedien, die Wasser als Kältemittel enthalten, haben darüber hinaus auch den Nachteil, dass mit ihnen in einer Absorptionskältemaschine nicht auf eine Temperatur von weniger als 4 °C abgekühlt werden kann, da es sonst im Verdampfer der Absorptionskältemaschinen zur Bildung von Eis kommen kann. Um Absorptionskältemaschinen zur Kühlung von Lebensmitteln bei niedrigeren Temperaturen einsetzen zu können besteht deshalb ein Bedarf an Arbeitsmedien, die mit einem Kältemittel mit niedrigerem Schmelzpunkt als Wasser eine hohe Leistungszahl erzielen.

DE 10 2010 027914 beschreibt Absorptionswärmepumpen, die mit einem Absorptionsmedium betrieben werden, das eine ionische Flüssigkeit als Sorptionsmittel und ein C2- bis C4-Alkanol als Kältemittel enthält.

EP 2 246 651 beschreibt ein Arbeitsmedium für eine Absorptionswärmepumpe, das Methanol als Kältemittel und 1-Ethyl-3-methylimidazoliumacetat als Sorptiönsmittel enthält und einen hohen Wirkungsgrad aufweisen soll. Das Dokument beschreibt außerdem in den Vergleichsversuchen, dass entsprechende Arbeitsmedien, die Methanol als Kältemittel und 1,3-Dimethylimidazoliumacetat oder 1-Ethyl-3-methylimidazoliumdiethylphosphat als Sorptionsmittel enthält, bei gleichem Gehalt an Methanol einen wesentlich höheren Dampfdruck von Methanol aufweisen, was zu einer geringeren Leistungszahl in einer Absorptionswärmepumpe führt.

J. Ren et al., J. Chem. Thermodynamics 43 (2011) 576-583 beschreibt Arbeitsmedien für Absorptionskältemaschinen, die als Sorptionsmittel 1-Ethyl-3-methylimidazoliumdimethylphosphat und als Kältemittel Wasser, Ethanol oder Methanol enthalten.

Z.. He et al., Fluid Phase Equilibria 298 (2010) 83-91 beschreibt Arbeitsmedien für Absorptionskältemaschinen, die als Sorptionsmittel 1,3-Dimethylimidazoliumdimethylphosphat und als Kältemittel Wasser, Ethanol oder Methanol enthalten.

J. Zhao et al., Fluid Phase Equilibria 247 (2006) 190-198 beschreibt Arbeitsmedien für Absorptionskältemaschinen, die als Sorptionsmittel 1,3-Dimethylimidazoliumdimethylphosphat oder 1-Ethyl-3-methylimidazoliumdiethylphosphat und als Kältemittel Wasser, Ethanol oder Methanol enthalten.

Die Erfinder der vorliegenden Erfindung haben nun überraschend gefunden, dass sich durch die Verwendung eines Arbeitsmedium, das Ethanol als Kältemittel und 1,3-Dimethylimidazoliumdiethylphosphat als Sorptionsmittel enthält, als Arbeitsmedium in einer Absorptionswärmepumpe eine verbesserte Leistungszahl im Vergleich zu Arbeitsmedien erzielen lässt, die als Sorptionsmittel eine ionische Flüssigkeit mit anderem Kation oder Anion enthalten.

Gegenstand der Erfindung ist dementsprechend die Verwendung einer Mischung, umfassend Ethanol als Kältemittel und 1,3-Dimethylimidazoliumdiethylphosphat als Sorptionsmittel, als Arbeitsmedium in einer Absorptionswärmepumpe.

Gegenstand der Erfindung ist außerdem eine Absorptionswärmepumpe, die einen Absorber, einen Desorber, einen Kondensator, einen Verdampfer und ein Arbeitsmedium umfasst, wobei das Arbeitsmedium Ethanol als Kältemittel und 1,3-Dimethylimidazoliumdiethylphosphat als Sorptionsmittel umfasst.

Der Begriff Absorptionswärmepumpe umfasst erfindungsgemäß alle Vorrichtungen, mit denen Wärme bei einem niedrigen Temperaturniveau aufgenommen und bei einem höheren Temperaturniveau wieder abgegeben wird und die durch Wärmezufuhr zum Desorber angetrieben werden. Die erfindungsgemäßen Absorptionswärmepumpen umfassen damit sowohl Absorptionskältemaschinen und Absorptionswärmepumpen im engeren Sinn, bei denen Absorber und Verdampfer bei einem geringeren Arbeitsdruck als Desorber und Kondensator betrieben werden, als auch Absorptionswärmetransformatoren, bei denen Absorber und Verdampfer bei einem höheren Arbeitsdruck als Desorber und Kondensator betrieben werden. In Absorptionskältemaschinen wird die Aufnahme von Verdampfungswärme im Verdampfer zur Kühlung eines Mediums genutzt. In Absorptionswärmepumpen im engeren Sinn wird die im Kondensator und/oder Absorber freigesetzte Wärme zum Heizen eines Mediums genutzt. In Absorptionswärmetransformatoren wird die im Absorber freigesetzte Absorptionswärme zum Heizen eines Mediums genutzt., wobei die Absorptionswärme auf einem höheren Temperaturniveau als bei der Zufuhr von Wärme zum Desorber verhalten wird.

Das erfindungsgemäß verwendete Arbeitsmedium für eine Absorptionswärmepumpe umfasst Ethanol als Kältemittel. Der Begriff Kältemittel bezeichnet dabei flüchtige Bestandteile des Arbeitsmediums, die bei dem Betrieb der Absorptionswärmepumpe im Desorber aus kältemittelreichem Arbeitsmedium verdampft werden und nach Kondensation im Kondensator und Verdampfen im Verdampfer der Absorptionswärmepumpe im Absorber wieder in kältemittelarmem Arbeitsmedium absorbiert werden. Vorzugsweise enthält das Arbeitsmedium im Wesentlichen nur Ethanol als Kältemittel, d.h. der Anteil des Arbeitsmediums, der sich brei 1 bar und 150 °C verdampften lässt, besteht zu mehr als 90 Gew.-% und vorzugsweise mehr als 98 Gew.-% aus Ethanol.

Das erfindungsgemäß verwendete Arbeitsmedium für eine Absorptionswärmepumpe umfasst als Sorptionsmittel 1,3-Dimethylimidazoliumdiethylphosphat. Der Begriff Sorptionsmittel bezeichnet dabei nicht flüchtige Bestandteile des Arbeitsmediums, die bei dem Betrieb der Absorptionswärmepumpe im Desorber nicht aus dem Arbeitsmedium verdampft werden. Vorzugsweise enthält das Arbeitsmedium im Wesentlichen nur 1,3-bimethylimidazoliumdiethylphosphat als Sorptionsmittel, d.h.. der Anteil des Arbeitsmediums, der sich bei 1 bar und 200°C nicht verdampfen lässt, besteht zu mehr als 90 Gew.-% und vorzugsweise mehr als 95 Gew.-% aus diesen Verbindungen.

Vorzugsweise enthält das erfindungsgemäß verwendete Arbeitsmedium 4 bis 67 Gew.-% Wasser und 30 bis 95 Gew.-% 1,3-Dimethylimidazoliumdiethylphosphat.

Das erfindungsgemäß verwendete Arbeitsmedium kann zusätzlich zu Wasser und 1,3-Dimethylimidazoliumdiethylphosphat noch Additive, vorzugsweise Korrosionsinhibitoren, enthalten. Der Anteil an Korrosionsinhibitoren beträgt vorzugsweise 10 bis 50.000 ppm, besonders bevorzugt 100 bis 10.000 ppm, bezogen auf die Masse der ionischen Flüssigkeit. Bevorzugte anorganische Korrosionsinhibitoren sind Li₂CrO₄, Li₂MoO₄, Li₃VO, LiVO₃, NiBr₂, Li₃PO₄, CoBr₂ und LiOH. Geeignete organische Korrosionsinhibitoren sind Amine und Alkanolamine, vorzugsweise 2-Aminoethanol, 2-Aminopropanol und 3-Aminopropanol, sowie als Fettsäurealkylolamide bezeichnete Amide von Fettsäuren mit Alkanolaminen und deren Alkoxylate. Geeignet ist beispielsweise die unter dem Handelsnamen REWOCOROS® AC 101 von Evonik Industries AG erhältliche Mischung aus 2-Aminoethanol und Ölsäureamidoethanol-Polyethoxylat. Als Korrosionsinhibitoren eignen sich außerdem organische Phosphorsäureester, insbesondere Phosphorsäureester von ethoxylierten Fettalkoholen, sowie Fettsäure-Alkanolamin-Gemische. Bevorzugte organische Korrosionsinhibitoren sind Benzimidazol und insbesondere Benzotriazol.

Das erfindungsgemäß verwendete Arbeitsmedium kann außerdem als Additiv zur Verbesserung der Leistungszahl einen einwertigen aliphatischen Alkohol mit 6 bis 10 Kohlenstoffatomen enthalten, vorzugsweise in einer Menge von 0,001 bis 0,1 Gew.-%. Der Alkohol ist vorzugsweise ein primärer Alkohol mit einem verzweigten Alkylrest und besonders bevorzugt 2-Ethyl-1-hexanol.

Durch die Kombination von Ethanol als Kältemittel und 1,3-Dimethylimidazoliumdiethylphosphat als Sorptionsmittel in einem Arbeitsmedium lässt sich in einer Absorptionswärmepumpe überraschenderweise eine höhere Leistungszahl erzielen als mit einem Arbeitsmedium, das an Stelle des 1,3-Dimethylimidazoliumdiethylphosphats eine als Sorptionsmittel für Absorptionswärmepumpen bekannte ionische Flüssigkeit mit anderem Kation oder Anion enthält. Darüber hinaus lässt sich durch die erfindungsgemäße Verwendung gegenüber dem aus EP 2 246 651 A2 bekannten Arbeitsmedium mit Methanol als Kältemittel das Risiko aus einer Leckage der Absorptionswärmepumpe mit Freisetzung des Kältemittels verringern, da Ethanol weniger giftig als Methanol ist. Die erfindungsgemäße Verwendung ermöglicht außerdem eine wirtschaftliche und energiesparende Abkühlung auf Temperaturen von weniger als 0 °C.

Die erfindungsgemäße Absorptionswärmepumpe umfasst einen Absorber, einen Desorber, einen Kondensator, einen Verdampfer und ein Arbeitsmedium, wobei das Arbeitsmedium Ethanol als Kältemittel und 1,3-Dimethylimidazoliumdiethylphosphat als Sorptionsmittel umfässt. Vorzugsweise umfasst die Absorptionswärmepumpe ein Arbeitsmedium, das weiter oben als bevorzugt verwendetes Arbeitsmedium beschrieben ist.

Im Betrieb der erfindungsgemäßen Absorptionswärmepumpe wird im Absorber dampfförmiges Kältemittel in kältemittelarmem Arbeitsmedium absorbiert unter Erhalt eines kältemittelreichen Arbeitsmediums und unter Freisetzung von Absorptionswärme. Aus dem so erhaltenen kältemittelreichen Arbeitsmedium wird im Desorber unter Wärmezufuhr Kältemittel dampfförmig desorbiert unter Erhalt von kältemittelarmem Arbeitsmedium, das in den Absorber zurückgeführt wird. Das im Desorber erhaltene dampfförmige Kältemittel wird im Kondensator unter Freisetzung von Kondensationswärme kondensiert, das erhaltene flüssige Kältemittel wird im Verdampfer unter Aufnahme von Verdampfungswärme verdampft und das dabei erhaltene dampfförmige Kältemittel wird in den Absorber zurückgeführt.

Die erfindungsgemäße Absorptionswärmepumpe kann sowohl einstufig als auch mehrstufig mit mehreren gekoppelten Kreisläufen des Arbeitsmediums ausgeführt sein.

In einer bevorzugten Ausführungsform ist die Absorptionswärmepumpe eine Absorptionskältemaschine und im Verdampfer wird Wärme aus einem zu kühlenden Medium aufgenommen. Das zu kühlende Medium kann beispielsweise Luft oder eine Wärmeübertägerflüssigkeit einer Kühlanlage oder Klimaanlage sein.

Die erfindungsgemäße Absorptionswärmepumpe weist gegenüber den aus WO 2005/113702 und WO 2006/134015 bekannten Absorptionswärmepumpen, die eine einzelne ionische Flüssigkeit als Sorptionsmittel verwenden, eine höhere Leistungszahl auf. Gegenüber der aus EP 2 246 651 bekannten Absorptionswärmepumpe hat die erfindungsgemäße Absorptionswärmepumpe den Vorteil, dass das Kältemittel nicht brennbar und nicht toxisch ist.

### Beispiele

Eine Absorptionskältemaschine Modell CH-MG 150 der Firma YAZAKI wurde mit Arbeitsmedien aus 80 Gew.-% ionischer Flüssigkeit und 20 Gew.-% Ethanol bei einer Antriebstemperatur von 85°C und einer Kühlwassertemperatur von 30°C mit einer Kühlleistung von ca. 527 kW betrieben und die Leistungszahl COP wurde als Verhältnis der Kälteleistung zur Heizleistung bestimmt. Die Kälteleistung wurde aus der Temperaturdifferenz zwischen der gemessenen Eingangs- und Ausgangstemperatur des gekühlten Wassers, dem gemessenen Volumenstrom des gekühlten Wassers, der Dichte von Wasser bei der mittleren Temperatur des gekühlten Wassers und der Wärmekapazität von Wasser berechnet. Die Heizleistung wurde analog aus der Temperaturdifferenz zwischen der gemessenen Eingangs- und Ausgangstemperatur des zur Beheizung verwendeten heißen Wassers, dem gemessenen Volumenstrom des heißen Wassers, der Dichte von Wasser bei der mittleren Temperatur des heißen Wassers und der Wärmekapazität von Wasser berechnet. Die Arbeitsmedien wurden jeweils ohne Zusatz von Additiv und mit Zusatz von 0,01 Gew.-% 2-Ethyl-1-hexanol (2EHL) untersucht. In Tabelle 1 bezeichnen die Abkürzungen folgende ionische Flüssigkeiten:
- EMIM DMP: 1-Ethyl-3-methylimidazoliumdimethylphosphat
- EMIM DEP: 1-Ethyl-3-methylimidazoliumdiethylphosphat
- MMIM DMP: 1,3-Dimethylimidazoliumdimethylphosphat
- MMIM DEP: 1,3-Dimethylimidazoliumdiethylphosphat
- MMIM OAc: 1,3-Dimethylimidazoliumacetat
- MMIM OPr: 1,3-Dimethylimidazoliumpropionat

**Tabelle 1**

| Ionische Flüssigkeit | Leistungszahl COP ohne Additiv | Leistungszahl COP mit 0,01 Gew.-% 2EHL |
|---|---|---|
| EMIM DMP* | 0,54 | 0,58 |
| EMIM DEP* | 0,57 | 0,60 |
| MMIM DMP* | 0,58 | 0,63 |
| MMIM DEP | 0,60 | 0,65 |
| MMIM OAc* | 0,51 | 0,56 |
| MMIM OPr* | 0,53 | 0,57 |

| | | |
|---|---|---|
| *nicht erfindungsgemäß | | |

## Patentansprüche

1. Verwendung einer Mischung, umfassend Ethanol als Kältemittel und 1,3-Dimethylimidazoliumdiethylphosphat als Sorptionsmittel, als Arbeitsmedium in einer Absorptionswärmepumpe.

2. Verwendung nach Anspruch 1, **dadurch gekennzeichnet, dass** die Mischung 4 bis 67 Gew.-% Wasser und 30 bis 95 Gew.-% 1,3-Dimethylimidazoliumdiethylphosphat enthält.

3. Absorptionswärmepumpe, umfassend einen Absorber, einen Desorber, einen Kondensator, einen Verdampfer und ein Arbeitsmedium, das Ethanol als Kältemittel und 1,3-Dimethylimidazoliumdiethylphosphat als Sorptionsmittel umfasst.

4. Absorptionswärmepumpe nach Anspruch 3, **dadurch gekennzeichnet, dass** das Arbeitsmedium 4 bis 67 Gew.-% Wasser und 30 bis 95 Gew.-% 1,3-Dimethylimidazoliumdiethylphosphat enthält.

5. Absorptionswärmepumpe nach Anspruch 3 oder 4, **dadurch gekennzeichnet, dass** sie eine Absorptionskältemaschine ist und im Verdampfer Wärme aus einem zu kühlenden Medium aufnimmt.

## Claims

1. Use of a mixture comprising ethanol as refrigerant and 1,3-dimethylimidazolium diethylphosphate as sorption medium as working medium in an absorption heat pump.

2. Use according to Claims 1, **characterized in that** the mixture contains from 4 to 67% by weight of water and from 30 to 95% by weight of 1,3-dimethylimidazolium diethylphosphate.

3. Absorption heat pump comprising an absorber, a desorber, a condenser, an evaporator and a working medium comprising ethanol as refrigerant and 1,3-dimethylimidazolium diethylphosphate as sorption medium.

4. Absorption heat pump according to Claim 3, **characterized in that** the working medium contains from 4 to 67% by weight of water and from 30 to 95% by weight of 1,3-dimethylimidazolium diethylphosphate.

5. Absorption heat pump according to Claim 3 or 4, **characterized in that** it is an absorption refrigeration machine and takes up heat from a medium to be cooled in the evaporator.

## Revendications

1. Utilisation d'un mélange comprenant de l'éthanol en tant que fluide frigorigène et du 1,3-diméthylimidazoliumdiéthylphosphate en tant que moyen de sorption, en tant que milieu de travail dans une pompe à chaleur à absorption.

2. Utilisation selon la revendication 1, **caractérisée en ce que** le mélange contient de 4 à 67 % en poids d'eau et de 30 à 95 % en poids de 1,3-diméthylimidazoliumdiéthylphosphate.

3. Pompe à chaleur à absorption, comprenant un absorbeur, un désorbeur, un condenseur, un évaporateur et un milieu de travail qui comprend de l'éthanol en tant que fluide frigorigène et du 1,3-diméthylimidazoliumdiéthylphosphate en tant que moyen de sorption.

4. Pompe à chaleur à absorption selon la revendication 3, **caractérisée en ce que** le milieu de travail contient 4 à 67 % en poids d'eau et 30 à 95 % en poids de 1,3-diméthylimidazoliumdiéthylphosphate.

5. Pompe à chaleur à absorption selon la revendication 3 ou 4, **caractérisée en ce qu'**elle est une machine de production de froid par absorption et reçoit dans l'évaporateur de la chaleur provenant d'un milieu à refroidir.
